# EUROPÄISCHE PATENTANMELDUNG

(11) **EP 1 375 301 A2**
(43) Veröffentlichungstag der Anmeldung: **02.01.2004**
(21) Anmeldenummer: 03001915.2
(22) Anmeldetag: 30.01.2003
(51) Int. Cl.: B62D 5/06, F02N 11/00

(54) **Vorrichtung mit einer durch einen Startergenerator antreibbaren Lenkhilfepumpe sowie Verfahren hierzu**

(30) Priorität: 22.06.2002 DE 10227993
(71) Anmelder: ROBERT BOSCH GMBH, 70442 Stuttgart (DE)
(72) Erfinder: Hohl, Reiner, 70197 Stuttgart (DE); Schnelle, Klaus-Peter, 71254 Ditzingen (DE); Kirner, Matthias, 70839 Gerlingen (DE)

(57) **Zusammenfassung**

Es wird eine Vorrichtung mit einer antreibbaren Lenkhilfepumpe (13) vorgeschlagen, wobei bei abgeschaltetem Hauptantrieb (16) die Lenkhilfepumpe (13) durch einen Startergenerator (19) antreibbar ist. Des Weiteren wird ein Verfahren zum Betreiben einer Lenkhilfepumpe (13) vorgeschlagen, wobei bei abgeschaltetem Hauptantrieb (16) die Lenkhilfepumpe (13) durch einen Startergenerator (19) angetrieben wird.

## Beschreibung

### Stand der Technik

Aus der europäischen Patentanmeldung EP 0958990 A2 ist eine Lenkhilfevorrichtung mit einer elektrisch angetriebenen Hydraulikpumpe bekannt. Für Fahrzeuge, die darüber hinaus weitere elektrische Antriebe aufweisen, ist nachteilig, dass ein weiterer elektrischer Motor mit einer weiteren Motorsteuerung erforderlich ist. Es ist demzufolge ein Mehraufwand erforderlich.

### Vorteile der Erfindung

Die erfindungsgemäße Vorrichtung mit einer elektrisch antreibbaren Lenkhilfepumpe mit den Merkmalen des Hauptanspruchs hat den Vorteil, dass durch die Verwendung des Startergenerators als Lenkhilfepumpenantrieb zumindest ein elektrischer Motor und eine Motorsteuerung entfällt und damit der materielle Aufwand deutlich verringert wird.

Durch die in den Unteransprüchen aufgeführten Maßnahmen sind vorteilhafte Weiterbildungen der Vorrichtung nach dem Hauptanspruch möglich. Wird der Hauptantrieb, beispielsweise eine Brennkraftmaschine, von der Lenkhilfepumpe und dem Startergenerator entkoppelt, so muss der Hauptantrieb durch den Startergenerator nicht mitgeschleppt werden, sodass sich eine Energieeinsparung ergibt. Weist die Vorrichtung einen Lenkgeschwindigkeitssensor auf, so ist es möglich, den elektrischen Antrieb bzw. den Startergenerator an die jeweiligen Erfordernisse anzupassen. So ist beispielsweise bei niedrigen Lenkgeschwindigkeiten ein Bereitschaftsbetrieb möglich, wobei die Lenkhilfepumpe nur mit geringer Leistung arbeitet. Bei höheren und höchsten Lenkgeschwindigkeiten kann dann beispielsweise ein Normal- bzw. Höchstleistungsbetrieb der Lenkhilfepumpe ermöglicht werden.

Darüber hinaus ist vorgesehen, dass eine Zelle vorhanden ist, aus der für eine bestimmte Lenkgeschwindigkeit eine bestimmte erforderliche Lenkhilfepumpenleistung ermittelbar ist.

Nach einem nebengeordneten Anspruch ist ein Verfahren zum Betreiben einer Lenkhilfepumpe vorgesehen, wobei bei abgeschaltetem Hauptantrieb, d.h. der Brennkraftmaschine, die Lenkhilfepumpe durch einen Startergenerator angetrieben wird.

### Zeichnungen

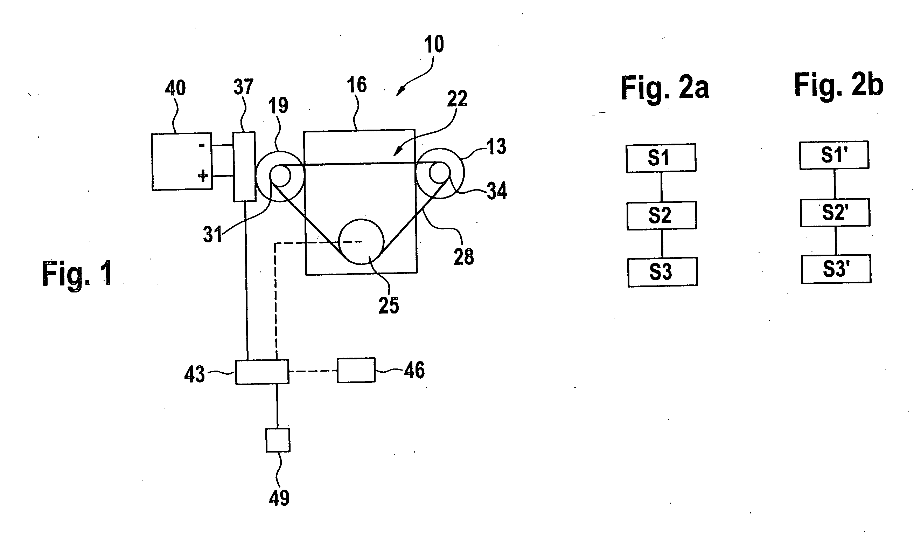

In den Zeichnungen ist ein Ausführungsbeispiel einer erfindungsgemäßen Vorrichtung sowie mehrere Verfahren zum Betreiben der Vorrichtung dargestellt. Es zeigen: Figur 1 eine erifindungsgemäße Vorrichtung in Draufsicht auf die Brennkraftmaschine; Figur 2a und Fig. 2b zwei Verfahrensabläufe zum Betreiben der Vorrichtung.

### Beschreibung

In Figur 1 ist eine Vorrichtung 10 mit einer mechanisch antreibbaren Lenkhilfepumpe 13 dargestellt, die bei abgeschaltetem, als Brennkraftmaschine ausgebildeten Hauptantrieb 16 durch einen Startergenerator 19 antreibbar ist. Der Startergenerator 19 und die Lenkhilfepumpe 13 sind mittels eines Getriebes 22, das hier als Riementrieb ausgeführt ist, miteinander verbunden. Über das Getriebe 22 ist auch ein Getriebeelement 25 gekoppelt, das beispielsweise als Riemenscheibe ausgebildet sein kann und durch eine Antriebswelle des Hauptantriebs 16 antreibbar ist. Im Beispiel ist das Getriebe 22 als Riementrieb ausgebildet, der über einen Riemen 28 verfügt und über den eine Startergeneratorriemenscheibe 31 mit einer Pumpenriemenscheibe 34 und dem Getriebeelement 25 verbunden ist. Der Startergenerator 19 ist mit einer Einheit 37 verbunden, die entweder einen motorischen oder einen generatorischen Betrieb des Startergenerators 19 ermöglicht. Die Einheit 37 kann beispielsweise als Pulswechselrichter ausgebildet sein. Die Einheit 37 ist mit einem elektrischen Energiespeicher 40 verbunden. Darüber hinaus ist ein Steuergerät 43 vorhanden, das zumindest zur Steuerung der Einheit 37 dient. Mit dem Steuergerät 43 ist ein Lenkwinkelsensor 46 zur Bestimmung des Lenkeinschlags an einem Lenkrad verbunden.

Das Getriebeelement 25 ist so ausgebildet, dass dieses ein Entkoppeln der Antriebswelle des Hauptantriebs 16 entweder aktiv oder passiv ermöglicht.

Wird ein Fahrzeug mittels des Hauptantriebs 16 angetrieben, so treibt der Hauptantrieb 16 über das Getriebeelement 25, den Riemen 28, die Startergeneraton-iemenscheibe 31 und die Pumpenriemenscheibe 34 die Lenkhilfepumpe 13 an. In diesem Fall wird auch der Startergenerator 19 generatorisch betrieben. Die Lenkhilfepumpe 13 erzeugt einen hydraulischen Druck zur Unterstützung der Lenkung.

Wird nun das Fahrzeug bzw. die Vorrichtung 10 im sogenannten Start-Stopp-Betrieb betrieben, d.h. bei Betriebszuständen, in denen keine Fortbewegung erforderlich ist, wird der Hauptantrieb 16 abgeschaltet, so ist auch dann eine Unterstützung der Lenkung mittels der Lenkhilfepumpe 13 erwünscht. Zu diesem Zweck wird bei abgeschaltetem Hauptantrieb 16 die Lenkhilfepumpe 13 durch den Startergenerätor 19 angetrieben. Das Steuergerät 43 wirkt dabei auf die Einheit 37 derartig ein, dass der Startergenerator 19 motorisch betrieben wird und über den Riemen 28 die Lenkhilfepumpe 13 antreibt. Damit mit dem Riementrieb 28 bzw. mit dem Getriebe 22 verbundene Lasten durch den Startergenerator 19 nicht noch zusätzlich und unnötigerweise mitgeschleppt werden müssen, ist das Getriebeelement 25 so ausgebildet, dass es in diesem Fall für eine Abkopplung des Hauptantriebs 16 sorgt. Das Getriebeelement 25 kann dazu entweder selbstabkoppelnd ausgebildet sein, d.h. es ist keine Einwirkung von außen, beispielsweise durch ein Steuergerät, erforderlich, um die Abkopplung durch das Getriebeelement 25 hervorzurufen. Beispielsweise könnte dies durch eine Freilaufkopplung erfolgen. Eine weitere Möglichkeit für eine Ausführung des Getriebeelements 25 besteht darin, eine steuerbare Ausführung eines abkoppelbaren Getriebeelements 25 aufzuweisen. Erkennt beispielsweise das Steuergerät 43 in einem Schritt S1, dass der Hauptantrieb 16 abgeschaltet ist, so veranlasst einerseits das Steuergerät 43 eine Abkopplung (Schritt S2) des Hauptantriebs 16 vom Getriebe 22 und andererseits eine Ansteuerung (Schritt S3) der Einheit 37, um den motorischen Betrieb des Startergenerators 19 herzustellen, siehe auch Figur 2a.

Um eine pausen- und dadurch lückenlose Unterstützung der Lenkung durch die Lenkhilfepumpe 13 zu erhalten, ist nach einem weiteren Ausführungsbeispiel vorgesehen, dass in einem Schritt 1' erkannt wird, dass ein elektrischer Antrieb der Lenkhilfepumpe 13 erforderlich ist, danach der Startergenerator 19 motorisch betrieben wird (Schritt S2'), um die Lenkhilfepumpe 13 bereits vor dem Abschalten des Hauptantriebs 16 anzutreiben und anschließend oder gleichzeitig dieser vom Getriebe 22 abgekoppelt wird (Schritt 3'), siehe auch Figur 2b. In anderen Ausführungsbeispielen ist eine Abkopplung des Hauptantriebs 16 vom Getriebe 22 gleichzeitig mit dessen Abschalten oder nach dessen Abschalten vorgesehen.

Um die vom Startergenerator 19 abzugebende Antriebsenergie für die Lenkhilfepumpe 13 möglichst gering zu halten, ist vorgesehen, dass die Lenkgeschwindigkeit ermittelbar ist. Im Ausführungsbeispiel nach Figur 1 ist deshalb vorgesehen, dass die Einheit 37 die Lenkgeschwindigkeit ermittelt. Günstigerweise wird dies beispielsweise über den Lenkwinkelsensor 46 durchgeführt. Das Steuergerät 43 ermittelt über verschiedene Zeitpunkte den jeweils unterschiedlichen Lenkwinkel und damit die'daraus resultierende mittlere Lenkwinkelgeschwindigkeit. Ist die Lenkwinkelgeschwindigkeit gering oder beispielsweise gleich Null, wird der Startergenerator 19 lediglich in Betriebsbereitschaft gehalten. Nimmt die Lenkwinkelgeschwindigkeit zu, so wird dementsprechend die Startergeneratorleistung und damit die Fördermenge der Lenkhilfepumpe 13 erhöht. Als Hilfsmittel kann dazu eine Zelle 49 vorgesehen sein, aus der für eine bestimmte Lenkwinkelgeschwindigkeit eine bestimmte erforderliche Lenkhilfepumpenleistung ermittelbar ist. Das Steuergerät 43 stellt eine bestimmte Lenkwinkelgeschwindigkeit fest und ermittelt daraus die erforderliche Lenkhilfepumpenleistung, um anschließend die Leistung des Startergenerators 19 entsprechend anzupassen.

Alternativ kann statt eines Lenkwinkelsensors 46 an dessen Stelle auch ein Lenkwinkelgeschwindigkeitssensor eingesetzt sein, der die tatsächliche Lenkwinkelgeschwindigkeit an das Steuergerät 43 übermittelt, sodass sich eine Berechnung dieses Werts im Steuergerät 43 erübrigt.

## Patentansprüche

1. Vorrichtung mit einer antreibbaren Lenkhilfepumpe (13), **dadurch gekennzeichnet, dass** bei abgeschaltetem Hauptantrieb (16) die Lenkhilfepumpe (13) durch einen Startergenerator (19) antreibbar ist.

2. Vorrichtung nach Anspruch 1, **dadurch gekennzeichnet, dass** der Hauptantrieb (16) von der Lenkhilfepumpe (13) und dem Startergenerator (19) entkoppelbar ist.

3. Vorrichtung nach einem der vorhergehenden Ansprüche, **dadurch gekennzeichnet, dass** die Vorrichtung im Start-Stopp-Betrieb betreibbar ist.

4. Vorrichtung nach einem der vorhergehenden Ansprüche, **dadurch gekennzeichnet, dass** diese ein Mittel zur Ermittlung der Lenkwinkelgeschwindigkeit hat.

5. Vorrichtung nach Anspruch 4, **dadurch gekennzeichnet, dass** eine Zelle (49) vorhanden ist, aus der für eine bestimmte Lenkwinkelgeschwindigkeit eine bestimmte erforderliche Lenkhilfepumpenleistung ermittelbar ist.

6. Verfahren zum Betreiben einer Lenkhilfepumpe (13), **dadurch gekennzeichnet, dass** bei abgeschaltetem Hauptantrieb (16) die Lenkhilfepumpe (13) durch einen Startergenerator (19) angetrieben wird.

7. Verfahren nach Anspruch 6, **dadurch gekennzeichnet, dass** der Startergenerator (19) in der Abhängigkeit von der Lenkwinkelgeschwindigkeit antreibt.

8. Verfahren nach Anspruch 7, **dadurch gekennzeichnet, dass** bei Überschreiten einer Mindestlenkwinkelgeschwindigkeit der Startergenerator (19) mit höherer Drehzahl betrieben wird.

9. Verfahren nach einem der Ansprüche 6 bis 8, **dadurch gekennzeichnet, dass** der Hauptantrieb (16) start-stopp-geregelt ist.

10. Verfahren nach einem der Ansprüche 6 bis 9, **dadurch gekennzeichnet, dass** der Hauptantrieb (16) von einem die Lenkhilfepumpe (13) und den Startergenerator (19) verbindenden Getriebe (22) abgekoppelt wird.

11. Verfahren nach Anspruch 10, **dadurch gekennzeichnet, dass** vor dem Abschalten des Hauptantriebs (16) dieser vom Getriebe (22) abgekoppelt wird.

12. Verfahren nach Anspruch 10, **dadurch gekennzeichnet, dass** nach dem Abschalten des Hauptantriebs (16) dieser vom Getriebe (22) abgekoppelt wird.

13. Verfahren nach Anspruch 10, **dadurch gekennzeichnet, dass** mit dem Abschalten des Hauptantriebs (16) dieser vom Getriebe (22) abgekoppelt wird.
